(19) **Europäisches Patentamt / European Patent Office / Office européen des brevets**

(11) **EP 4 078 922 B1**

(12) **FASCICULE DE BREVET EUROPEEN**

(45) Date de publication et mention de la délivrance du brevet:
**30.08.2023 Bulletin 2023/35**

(21) Numéro de dépôt: **20842256.8**

(22) Date de dépôt: **04.12.2020**

(51) Classification Internationale des Brevets (IPC):
*H04W 12/02* (2009.01)  *H04L 9/40* (2022.01)
*H04W 12/30* (2021.01)  *H04W 12/40* (2021.01)
*H04W 4/60* (2018.01)  *H04W 8/20* (2009.01)

(52) Classification Coopérative des Brevets (CPC):
**H04L 63/0853; H04L 63/102; H04W 4/60;**
**H04W 8/205; H04W 12/02; H04W 12/35;**
**H04W 12/40;** H04W 12/75

(86) Numéro de dépôt international:
**PCT/FR2020/052286**

(87) Numéro de publication internationale:
**WO 2021/123542 (24.06.2021 Gazette 2021/25)**

(54) **PROCÉDÉ D'OBTENTION D'UNE COMMANDE RELATIVE À UN PROFIL D'ACCÈS RÉSEAU D'UN MODULE DE SÉCURITÉ DE TYPE EUICC**

VERFAHREN ZUM ERHALTEN EINES BEFEHLS BETREFFEND EIN NETZWERKZUGRIFFSPROFIL EINES EUICC-SICHERHEITSMODULS

METHOD FOR OBTAINING A COMMAND RELATING TO A NETWORK ACCESS PROFILE OF AN EUICC SECURITY MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2019 FR 1915340**

(43) Date de publication de la demande:
**26.10.2022 Bulletin 2022/43**

(73) Titulaire: **Orange**
**92130 Issy-les-Moulineaux (FR)**

(72) Inventeurs:
• **GAMISHEV, Todor**
**92326 CHATILLON (FR)**
• **COUREAU, Laurent**
**92326 CHATILLON (FR)**

(56) Documents cités:
**WO-A1-2018/185435**  **US-A1- 2019 075 453**

## Description

Domaine technique

La présente invention se rapporte au domaine général des télécommunications. Elle concerne plus particulièrement un procédé d'obtention d'une commande relative à un profil d'accès à un réseau de télécommunications par un équipement de communication.

L'invention trouve notamment une application particulièrement dans le cadre de l'utilisation de modules de sécurité embarqués dans des dispositifs dits compagnons (*companion devices*) associés à des terminaux mobiles, par exemple pour le chargement d'un profil d'accès au réseau après souscription d'une offre de service auprès d'un opérateur de réseau mobile, ou pour la configuration ou la mise à jour à distance du profil, etc.

État de la technique

L'association des opérateurs de téléphonie mobile désignée par GSMA (*Global System for Mobile Communications Association*) développe un standard de carte "SIM" (*Subscriber Identity Module*) embarquée, ou "eSIM", de type "eUICC" (*embedded UniversalIntegrated Circuit Card*) pour des équipements mobiles grand public, tels qu'un terminal mobile ou une tablette. Une carte SIM embarquée est destinée à être inamovible et (re)programmable à distance. Ainsi, lors de l'acquisition d'un nouvel équipement mobile, il n'est plus nécessaire de manipuler au préalable la carte SIM afin d'accéder au réseau d'un opérateur, voire de la changer lors d'un changement d'opérateur. Il est prévu qu'un utilisateur s'abonne directement via l'écran de son équipement mobile, ou en se rendant dans une boutique de l'opérateur, et charge un profil d'accès au réseau à partir de son équipement mobile, voire qu'il change d'opérateur de la même façon. Une carte eSIM est identifiée de façon unique au moyen d'un identifiant de module, désigné par "EID" (*eUICC Identifier*), qui constitue un identifiant physique de la carte, défini en usine et non modifiable. De ce fait cet identifiant est considéré comme une donnée sensible d'un point de vue protection de la vie privée, qui ne peut être exposée sans le consentement de l'utilisateur de l'équipement mobile.

Dans le cas par exemple de l'obtention et du chargement d'un profil initial d'accès au réseau par un équipement mobile, la GSMA prévoit, lors de la souscription d'un abonnement auprès d'un opérateur de réseau mobile, de gérer dans un serveur intermédiaire du réseau appelé habituellement "serveur de découverte" (ou désigné par SM-DS - *Subscription ManagerDiscovery Servet*), indépendant des opérateurs, une correspondance entre l'identifiant EID d'un module de sécurité de type eUICC et l'adresse d'une plateforme "serveur de préparation de données", appelée "SM-DP+" (*Subscription Manager Data Préparation*), choisie par l'opérateur auprès duquel l'abonnement est souscrit et grâce à laquelle l'opérateur tient à disposition un profil d'accès généré pour le module. Lorsqu'un équipement mobile souhaite obtenir un profil d'accès au réseau suite à une souscription auprès d'un opérateur, il s'adresse au serveur intermédiaire, SM-DS, qui identifie, sur la base de l'identifiant EID du module de sécurité de l'équipement mobile, l'adresse de la plateforme SM-DP+ sur laquelle un profil a été généré pour cet équipement. Le serveur intermédiaire envoie alors à l'équipement mobile l'adresse du serveur SM-DP+ de gestion de l'opérateur, auprès duquel l'équipement peut obtenir son profil. L'équipement mobile établit alors une connexion avec le serveur de gestion de l'opérateur de manière à récupérer son profil et l'installer dans le module de sécurité. Ce mode de fonctionnement nécessite de partager l'identifiant du module de sécurité avec le serveur intermédiaire du réseau qui stocke des correspondances entre des identifiants EID de modules de sécurité et des adresses de serveur de gestion d'opérateurs qui génèrent les profils d'accès au réseau.

Une telle solution offre une certaine souplesse dans la gestion d'abonnements par l'utilisateur, qui peut facilement commander depuis son équipement mobile l'activation d'une souscription initiale, ou d'une nouvelle souscription dans le cas d'un changement d'opérateur. Cependant, ce mode de fonctionnement nécessite de partager l'identifiant EID du module de sécurité avec le serveur intermédiaire du réseau qui stocke des correspondances entre un identifiant de module de sécurité et une adresse de serveur de gestion de l'opérateur qui a généré le profil d'accès au réseau. Le serveur intermédiaire est ainsi capable de tracer l'identifiant EID d'un module de sécurité et de porter atteinte aux données privées de l'utilisateur de l'équipement mobile. Par ailleurs, l'identifiant EID du module de sécurité est exposé, notamment au piratage, dans le réseau, en étant transmis et/ou partagé entre plusieurs entités du réseau, sans qu'à aucun moment l'utilisateur de l'équipement mobile n'ait donné son consentement pour la divulgation de cet identifiant, qui, non modifiable, est une donnée sensible dont la protection contre des tentatives frauduleuses doit être efficace.

Le document de brevet WO2018/185435A1 du même demandeur décrit un procédé d'obtention d'une commande relative à un profil d'accès à un réseau par un équipement mobile, la commande étant destinée à être mise en oeuvre sur un module de sécurité de l'équipement. Selon le procédé décrit, une requête d'obtention d'informations destinée à obtenir la commande est envoyée à un serveur, la requête comprenant un identifiant anonyme du module de sécurité; cet identifiant anonyme étant calculé à partir d'un identifiant physique du module et d'une valeur obtenue aléatoirement.

Le document US2019/0075453 (titulaire : Samsung Electronics) publiée le 7 mars 2019 décrit un système décrit un procédé de transfère de profils entre deux dispositifs.

Par ailleurs, on assiste depuis quelques années au développement d'objets dits connectés, c'est-à-dire des objets capables, outre leur fonction principale, d'envoyer ou de recevoir des informations par l'intermédiaire d'un réseau de télécommunication. Parmi ces objets connectés certains peuvent être couplés avec un terminal de téléphonie mobile tel qu'un *smartphone* afin de fournir des fonctionnalités additionnelles. À titre d'exemple, une "montre connectée" est une montre numérique connectée sans fil qui peut être associée à un terminal mobile pour en utiliser les fonctionnalités principales (affichage d'information, configuration de la montre depuis le terminal mobile, etc.).

D'autre part, un terminal de communication mobile peut être également associé à un autre terminal de communication dit terminal primaire, en tant que terminal "compagnon", pour pouvoir profiter de l'interface réseau ou de l'interface homme machine du terminal primaire.

Pour pouvoir se connecter au réseau mobile, un équipement de communication, dit terminal secondaire, tel qu'une montre connectée ou un terminal compagnon, est typiquement équipé d'un module de sécurité de type eUICC, associé à un identifiant EID, et l'application (SIM) qui réside dans la carte eUICC de l'équipement doit être par conséquent configurée ou paramétrée avec des données issues d'un profil d'abonné à un opérateur de téléphonie.

Par ailleurs, comme évoqué plus haut concernant un terminal de téléphonie mobile équipé d'une carte eUICC, l'identifiant physique EID de la carte eUICC d'un tel terminal secondaire doit rester secret afin de préserver la confidentialité des données personnelles de l'utilisateur de l'équipement.

Exposé de l'invention

La présente invention vise à améliorer la situation exposée ci-dessus. Ainsi, selon un premier aspect, l'invention a pour objet un procédé d'obtention d'une commande relative à un profil d'accès réseau d'un module de sécurité de type "carte à circuit intégré universelle embarquée" (eUICC), tel que défini dans la revendication 1.

On notera ici que le terminal de communication précité, par exemple un téléphone mobile (*smartphone*) peut être désigné par "terminal primaire" étant donné que c'est le terminal de communication pour lequel l'utilisateur dispose éventuellement d'un abonnement de téléphonie auprès d'un opérateur de téléphonie. Cependant, selon un autre exemple de réalisation, le terminal primaire peut être un ordinateur personnel de type PC situé par exemple dans une agence commerciale d'un opérateur de télécommunications, et utilisé par un conseiller commercial, employé de l'agence, pour configurer le profil d'accès réseau d'un équipement additionnel d'un client, par exemple un objet connecté ou un téléphone mobile additionnel du client; dans ce cas, le terminal primaire ne dispose pas de carte eUICC (eSIM) ou même de carte UICC (SIM) mais seulement d'une application logicielle dédiée à la gestion des abonnements clients au réseau et services de l'opérateur. L'équipement de communication susmentionné- par exemple un objet connectée telle qu'une montre connectée, ou un terminal de communication compagnon - peut être quant à lui désigné par "terminal secondaire".

Ainsi, grâce au procédé d'obtention d'une commande tel que succinctement défini plus haut, l'utilisateur du terminal de communication primaire pourra déclencher la souscription ou la mise à jour d'un profil d'abonné pour un terminal de communication secondaire, en utilisant son terminal primaire comme intermédiaire avec les serveurs de l'opérateur (premier et second serveurs précités) dans une première phase du procédé qui aboutit à l'envoi d'une requête d'obtention de données au second serveur (serveur de préparation de données). Lors d'une seconde phase du procédé, c'est le terminal secondaire, qui ayant obtenu le paramètre aléatoire instancié et utilisé par le terminal primaire et disposant de la fonction permettant de calculer l'identifiant anonyme ayant été utilisé par le terminal primaire lors de la première phase, pourra ensuite obtenir du troisième serveur (serveur de découverte), l'adresse du second serveur pour obtenir la commande à exécuter dans son module de sécurité.

Par conséquent, il n'est nul besoin de charger ou de pré-charger dans le module de sécurité du terminal secondaire une application spécifique de l'opérateur de téléphonie. Par ailleurs, les terminaux primaire et secondaire ne nécessitent pas de pouvoir communiquer directement entre eux (par exemple, aucun protocole commun ou de technique d'appairage ne sont nécessaires); en effet, c'est l'utilisateur qui est impliqué, et donc sert d'interface entre les deux terminaux, lors de la première étape (a) d'obtention par le terminal primaire de l'identifiant physique (EID) du module de sécurité du terminal secondaire, ainsi que lors de l'étape (c) d'obtention par le terminal secondaire du paramètre aléatoire (Pa). De plus, les deux terminaux primaire et secondaire peuvent provenir de deux fabricants différents et ne pas être compatibles entre eux ni du point de vue systèmes d'exploitation ni du point de vue protocoles de communication.

Avantageusement, le procédé "d'obtention d'une commande" selon l'invention permet de garder anonyme l'identifiant physique (EID) du terminal secondaire, puisque c'est un identifiant anonyme (TEID) calculé à partir de l'identifiant physique qui est utilisé notamment par le terminal primaire lors de la première phase susmentionnée du procédé selon l'invention.

Globalement, le procédé "d'obtention d'une commande" selon l'invention permet de faciliter la mise en oeuvre notamment de chargements d'abonnement sur des terminaux secondaires tels que des objets connectés, par exemple dans le contexte de l'Internet des Objets (IoT - *Internet of Things*), en limitant la dépendance technique entre les terminaux secondaire et primaire, donc entre les fournisseurs des différents terminaux.

Selon un mode de réalisation particulier du procédé d'obtention d'une commande, selon l'invention, l'identifiant anonyme (TEID) précité est calculé en appliquant une fonction à sens unique à l'identifiant physique (EID) du module de sécurité et au paramètre aléatoire, cette fonction à sens unique ayant également une propriété de non collision.

On rappelle ici qu'une fonction à sens unique peut être aisément calculée mais est difficile à inverser, c'est-à-dire que pour tout x dont on connaît l'image $z=f(x)$, il est très difficile de déterminer x. En d'autres termes, il est très difficile d'obtenir la fonction inverse de la fonction f. L'utilisation d'une fonction à sens unique pour le calcul de l'identifiant anonyme permet par conséquent de garantir l'anonymat du module de sécurité. En effet, l'identifiant physique du module (EID), ne peut pas être déduit de l'identifiant anonyme. La propriété de non collision de la fonction à sens unique utilisée garantit par ailleurs l'unicité des identifiants anonymes générés.

Selon une caractéristique particulière du procédé selon l'invention, le procédé comprend en outre:

- l'envoi par l'équipement de communication au serveur de préparation de données, de l'identifiant anonyme (TEID);
- la réception en provenance du serveur de préparation de données, de la commande préparée, après vérification par le serveur de préparation de données de l'authenticité de l'identifiant anonyme (TEID); et,
- l'exécution de la commande reçue par le module de sécurité de l'équipement de communication.

Selon une caractéristique particulière de réalisation du procédé, le procédé comprend une authentification mutuelle entre le module de sécurité et le serveur de découverte, cette authentification étant représentative d'un accord de l'utilisateur de divulguer l'identifiant physique du module de sécurité de l'équipement de communication, au serveur de découverte.

Dans cet exemple de réalisation, il y a authentification mutuelle entre le module de sécurité de l'équipement de communication et le serveur de découverte. Cette authentification nécessite de révéler l'identifiant physique EID du module de sécurité au serveur de découverte. De ce fait, cette authentification, lorsqu'elle est mise en oeuvre, constitue un consentement implicite de l'utilisateur à divulguer l'identifiant physique de son module de sécurité.

Selon une variante de réalisation du procédé, le procédé comprend une authentification anonyme du module de sécurité auprès du serveur de découverte, mise en oeuvre au moyen d'un algorithme de signature de groupe.

Une authentification anonyme basée par exemple sur un algorithme de signature de groupe permet de ne pas divulguer au serveur de découverte l'identifiant physique EID du module de sécurité de l'équipement de communication. Cependant, cela permet au serveur de déterminer, lorsque l'authentification réussit, qu'il est en communication avec un module de sécurité valide.

Selon un deuxième aspect, l'invention a pour objet un système tel que défini dans la revendication 6..

Selon une caractéristique particulière de l'équipement de communication exposé ci-dessus, celuici est configuré en outre pour:

- envoyer au serveur de préparation de données, le paramètre aléatoire et l'identifiant physique (EID) utilisés pour calculer l'identifiant anonyme (TEID);
- recevoir du serveur de préparation de données, la commande préparée, après vérification par le serveur de préparation de données de l'authenticité de l'identifiant anonyme (TEID), et
- exécuter la commande reçue.

En pratique, un équipement de communication selon l'invention ("terminal secondaire") tel que brièvement exposé est configuré pour la mise en oeuvre du procédé selon l'invention par l'intermédiaire de modules logiciels. En particulier un tel équipement, par exemple un objet connecté, dispose d'une application logicielle (indépendante du module de sécurité de l'équipement) dont l'exécution par un processeur incorporé dans l'équipement, permet de mettre en oeuvre les étapes du procédé selon l'invention qui sont mises en oeuvre par l'équipement.

Par conséquent, selon un troisième aspect, l'invention vise également un programme d'ordinateur, ce programme comprenant des instructions de programme dont l'exécution par un processeur de l'équipement de communication précité, provoque la mise en oeuvre des étapes du procédé selon l'invention mises en oeuvre dans l'équipement de communication. Un tel programme d'ordinateur selon l'invention peut utiliser divers langages de programmation, et comprendre des programmes sous forme de code source, code objet, ou de code intermédiaire entre code source et code objet, tel que dans une forme partiellement compilée, ou dans n'importe quelle autre forme souhaitable.

Enfin, l'invention vise aussi un support d'enregistrement d'informations lisible par un ordinateur, sur lequel est enregistré un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou une carte mémoire, ou un moyen d'enregistrement magnétique, tel qu'un disque dur. D'autre part, un programme ou module logiciel selon l'invention peut être en particulier téléchargé sur un réseau de type Internet.

Les avantages procurés par un équipement de communication, un programme d'ordinateur, selon l'invention, tels que brièvement définis ci-dessus, sont identiques ou contribuent à ceux mentionnés plus haut en relation avec le procédé "d'obtention d'une commande relative à un profil d'accès réseau d'un module de sécurité", selon l'invention, et par conséquent ne seront pas rappelés ici.

Brève description des figures

D'autres caractéristiques et avantages de la présente invention ressortiront de la description détaillée qui suit, laquelle fait référence aux dessins annexés dans lesquels :

- la figure 1 représente les étapes d'un procédé d'obtention d'une commande relative à un profil d'accès réseau d'un module de sécurité, selon un mode de réalisation particulier de l'invention;
- la figure 2 est une représentation schématique d'un terminal de communication configuré pour mettre en oeuvre certaines des étapes du procédé d'obtention d'une commande relative à un profil d'accès à un réseau, selon un exemple de réalisation;
- la figure 3 est une représentation schématique d'un équipement de communication configuré pour mettre en oeuvre certaines des étapes du procédé d'obtention d'une commande relative à un profil d'accès à un réseau, selon un exemple de réalisation; et,
- la figure 4 est une représentation schématique d'un serveur de préparation de données, apte à mettre en oeuvre certaines des étapes du procédé d'obtention d'une commande relative à un profil d'accès à un réseau, selon un exemple de réalisation de l'invention.

Description détaillée

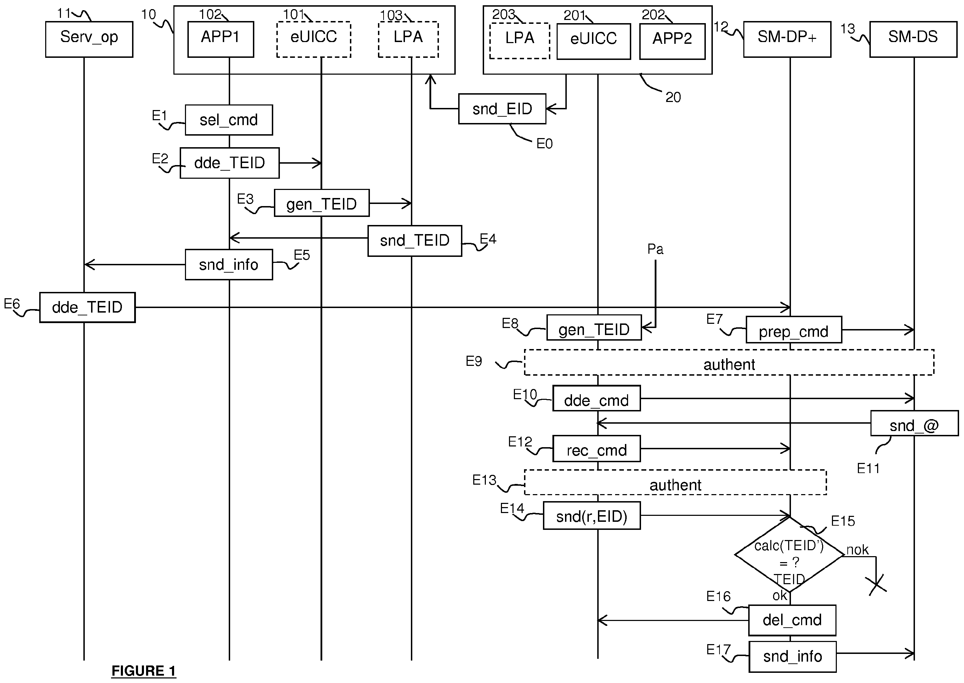

La **figure 1** représente sous forme d'organigramme les principales étapes d'un procédé d'obtention d'une commande relative à un profil d'accès réseau par un équipement de communication, selon un exemple de réalisation.

Selon l'exemple de réalisation de l'invention choisi et illustré par la figure 1, le procédé est mis en oeuvre entre un terminal de communication 10 et un équipement de communication 20. L'équipement 20 (désigné aussi par "terminal secondaire" dans la présente description) est par exemple un objet connecté tel qu'une montre connectée, ou un dispositif compagnon.

Le terminal de communication 10 (désigné aussi par "terminal primaire" dans la présente description) est dans l'exemple illustré un terminal mobile de type "téléphone intelligent" (*smartphone*) ou une tablette, et est équipé d'un module de sécurité embarqué 101 de type eUICC, ou d'un module de sécurité amovible (carte SIM). Cependant, selon un autre exemple de mise en oeuvre de l'invention, le terminal 10 peut être également un ordinateur personnel de type PC (*Personal Computet*) situé par exemple dans une agence commerciale d'un opérateur de télécommunications, et utilisé par un conseiller commercial, employé de l'agence, pour configurer le profil d'accès réseau de l'équipement 20 d'un client, par exemple une montre connectée ou un second téléphone mobile du client. Dans ce cas, le terminal 10 ne dispose pas de carte eUICC mais seulement d'une application logicielle APP1 et d'une connexion réseau de type Internet.

Par conséquent, selon le mode de réalisation du procédé selon l'invention, l'utilisateur du terminal 10 et de l'équipement 20 peut être par exemple le conseiller susmentionné d'une agence commerciale, ou bien, lorsque le terminal de communication 10 est un téléphone mobile (*smartphone*), l'abonné au réseau mobile de l'opérateur de télécommunications, pour la carte eUICC du terminal 10.

Dans le mode de réalisation décrit ci-après, le terminal de communication 10 est un téléphone mobile de type *smartphone,* et comporte des modules fonctionnels similaires à ceux décrits dans le document WO2018/185435A1 mentionné plus haut, en relation avec "l'équipement mobile" (10) décrit dans ce document.

Dans le mode de réalisation représenté à la figure 1, le terminal de communication 10 comporte un module de sécurité 101, dans cet exemple une carte eUICC, et est identifié par un identifiant physique de carte EID ( eUICC Identifier), défini en usine. Le terminal de communication 10 comprend également une application logicielle 102 (APP2) - dans le cas présent, une application pour téléphone mobile, désignée par "application mobile" - agencée pour permettre à l'utilisateur d'initier et/ou de valider une commande relative à un profil d'accès à un réseau de télécommunications. L'application mobile 102 est fournie par un fournisseur de services, par exemple un opérateur de réseau mobile. Le profil d'accès est destiné à permettre à l'utilisateur d'accéder au réseau à partir du terminal de communication 10. À cette fin, l'application 102 est agencée pour communiquer à un premier serveur 11, appelé "serveur opérateur", des données qui comprennent des caractéristiques physiques du terminal de communication 10 et du module de sécurité 101, ainsi que des données correspondant à la commande relative au profil d'accès et validée par l'utilisateur.

Le serveur opérateur 11 est agencé pour demander à un deuxième serveur 12, appelé "serveur de préparation de données", de préparer la commande relative au profil d'accès au réseau pour un module de sécurité du type de celui du terminal de communication 10. Le serveur de préparation de données 12 est agencé pour préparer la commande qu'il a reçue et pour notifier un troisième serveur 13, appelé "serveur de découverte", qu'un événement est en attente pour un module de sécurité qu'il désigne au moyen d'un identifiant anonyme. Cette notification d'événement permet d'indiquer au serveur de découverte 13 qu'une commande relative à un profil d'accès a été préparée et est disponible au niveau du serveur de préparation 12 sans fournir au serveur de découverte 13 d'informations quant au contenu de cette commande. "Commande disponible" signifie que la commande peut être récupérée afin d'être mise en oeuvre sur le terminal 10.

Plus précisément, les serveurs 12 (serveur de préparation de données) et 13 (serveur de découverte) susmentionnés sont désignés respectivement par "SM-DP+" (*Subscription Manager Data Préparation*) et "SM-DS" (*Subscription Manager Discovery Server*), dans la spécification GSMA "SGP.22" (*RSP Technicai Spécification - Version 2.2 - 01 September 2017*), qui décrit une architecture pour la fourniture à distance de profil (*RSP - Remote SIM Provisionning*).

Le terminal 10 est également agencé pour s'adresser au serveur de découverte 13, afin d'obtenir l'adresse du serveur de préparation de données 12 qui a préparé la commande relative au profil d'accès. le terminal 10 est ainsi apte, après obtention de l'adresse du serveur de préparations de données 12, à requérir auprès du serveur de préparation de données 12 la commande relative au profil, telle que le chargement initial du profil ou l'exécution de la configuration ou une mise à jour d'un profil déjà installé. Une fois obtenue, la commande relative au profil est exécutée sur le module de sécurité 101.

Le terminal de communication 10 comprend également un gestionnaire local de profil 103, ou LPA (pour *"Local Profile Assistant"*). De manière de classique, le gestionnaire local de profil 103 fournit à l'utilisateur du terminal de communication 10 une interface administrative du terminal 10. Dans le cas par exemple du chargement d'un profil d'accès au réseau sur le terminal de communication 10, le gestionnaire local de profil 103 est agencé pour récupérer le profil auprès de l'opérateur via une connexion Internet sécurisée auprès du serveur de préparation de données 12 et pour commander son installation et son activation sur le module de sécurité 101. Dans un exemple de réalisation, le gestionnaire local de profil 103 se trouve dans le module de sécurité 101. Il est ainsi agencé pour faire des calculs et notamment pour générer les identifiants anonymes TEID, sous le contrôle de l'application mobile 102. Cependant, à la différence de l'équipement mobile décrit dans le document WO2018/185435A1 précité, l'application mobile APP1 (102) du terminal de communication 10 est, conformément à la présente invention, configurée pour générer un identifiant anonyme TEID à partir d'un identifiant physique EID fourni par une interface d'entrée/sortie du terminal.

Toujours à la figure 1, l'équipement de communication 20 (désigné aussi par "terminal secondaire" dans la présente description), par exemple un objet connecté tel qu'une montre connectée, ou un terminal mobile dit "compagnon", dispose d'un module de sécurité 201, en l'occurrence une carte eUICC, d'une application logicielle APP2 202, ainsi que, le cas échéant, un gestionnaire local de profil 203 qui communique avec le module de sécurité 201 de la même façon que le gestionnaire local de profil (103) du terminal primaire 10, comme exposé plus haut. L'application 202 est configurée selon l'invention pour communiquer avec la carte eUICC 201, et notamment pour en obtenir l'identifiant physique EID ainsi que pour calculer un identifiant anonyme TEID à partir de l'identifiant physique (EID) du module de sécurité 201 et d'un paramètre aléatoire *Pa* fourni au préalable par une interface d'entrée/sortie de l'équipement 20.

Le processus, selon l'invention, d'obtention d'une commande relative à un profil d'accès réseau du module de sécurité 201 de l'équipement de communication 20 se déroule selon deux phases successives: une première phase mise oeuvre essentiellement par le terminal de communication 10 et une seconde phase mise en oeuvre par l'équipement 20.

On entend par « commande relative à un profil d'accès » une commande comprenant des instructions de code destinées à être exécutées sur le module de sécurité 201. Par exemple la commande consiste en un chargement du profil d'accès au réseau sur le module de sécurité et en une activation du profil après que l'utilisateur a souscrit une offre de service associée auprès d'un opérateur, ou en une configuration ou une mise à jour du profil d'accès préalablement chargé dans le module de sécurité 201, suite à la validation de cette configuration ou cette mise à jour par l'utilisateur.

La première phase commence par une étape initiale **E0** (snd_EID) au cours de laquelle, l'utilisateur de l'équipement 20 ouvre l'application APP2 202 et interagit, par exemple tactilement, avec une interface utilisateur de l'application pour provoquer l'affichage sur l'écran de l'équipement 20 de l'identifiant EID du module de sécurité 201 (carte eUICC) de l'équipement 20. Au cours de cette même étape, l'utilisateur ouvre également l'application APP1 102 du terminal mobile 10 et déclenche par une commande sur le terminal (via une interaction tactile par exemple) l'obtention de l'identifiant de l'identifiant EID de la carte eUICC 201 par l'application APP1 du terminal 10. En pratique, le transfert de l'identifiant EID de l'équipement 20 vers le terminal 10 peut être effectué exemple par recopie manuelle (via clavier ou écran tactile) par l'utilisateur, ou bien en utilisant dans le terminal 10 un lecteur de code-barres (ou codes similaires) associé à l'application APP1, l'identifiant EID étant affiché sous forme de code-barres (ou codes similaires) sur l'écran de l'équipement 20. Selon un autre exemple, un tel code-barres peut être affiché sur une boîte contenant l'équipement, lors de l'achat en boutique de cet équipement.

Dans l'exemple de réalisation utilisant un lecteur de code-barres, l'identifiant EID est associé dans le code-barres à des informations relatives aux caractéristiques physiques de l'équipement 20 et du module de sécurité 201. Les caractéristiques physiques concernent par exemple la taille de l'écran de l'équipement 20, les capacités à communiquer en NFC (*Near Field Communication*) de l'équipement 20, la taille de la mémoire du module de sécurité 201, la version de système d'exploitation, etc. Ces caractéristiques physiques sont destinées à être prises en compte par le serveur de préparation 12 lors de la préparation de la commande relative au profil, afin que celle-ci soit adaptée à l'équipement 20 et au module de sécurité 201 sur lesquels elle doit être exécutée. Ainsi, à l'issue de l'étape E0, l'application APP1 du terminal 10 dispose de l'identifiant EID de la carte eUICC 201 de l'équipement 20, ainsi que des informations associées précitées.

A l'étape **E1** qui suit (sel_cmd), l'utilisateur sélectionne sur le terminal mobile 10, par l'intermédiaire de l'application mobile 102, une commande relative à un profil d'accès au réseau, telle que par exemple, la souscription d'un abonnement ou le chargement initial - c'est-à-dire l'obtention et l'activation, du profil d'accès au réseau qui devra être appliqué à l'équipement 20 -, une configuration du profil, une mise à jour de règles relatives au profil ( *"policy rules"* en anglais), ou encore une opération de maintenance du profil, etc.

Au cours de l'étape **E2** qui suit, l'application 102 envoie au module de sécurité 103 l'identifiant EID, obtenu à l'étape E0, de la carte eUICC 201 de l'équipement 20, associé à une demande (dde_TEID) de génération d'identifiant anonyme (TEID) à partir de l'identifiant EID. Cependant, selon un autre mode de réalisation selon lequel, le terminal 10 ne dispose pas de carte eUICC, par exemple lorsque le terminal 10 est un ordinateur personnel, c'est l'application 102 elle-même qui génère l'identifiant anonyme (TEID) à partir de l'identifiant EID.

À l'étape suivante, **E3,** le module de sécurité 101 reçoit la demande de génération d'identifiant anonyme et calcule un identifiant anonyme TEID de l'identifiant physique EID reçu. À cet effet, il génère un paramètre aléatoire (Pa) *r* au moyen par exemple d'un générateur pseudo-aléatoire et applique une fonction à sens unique *f* au paramètre aléatoire *r* et à l'identifiant physique EID, selon l'équation suivante:

$$\mathrm{TEID} = f(\mathrm{EID}, r)$$

On rappelle qu'une fonction à sens unique est une fonction qui peut être aisément calculée mais qui est difficile à inverser, c'est-à-dire que pour tout nombre *x* dont on connaît l'image *f(x),* il est très difficile de trouver *x*. La fonction à sens unique *f* est par exemple une fonction de hachage, réputée non inversible, telle que SHA-3 ou SHA-256 (SHA: *Secure Hash Algorithm*). Dans le cas où la fonction à sens unique est SHA-256, on peut, dans un exemple de réalisation, ne prendre que les 32 premiers digits, ou les 32 derniers digits, du résultat de la fonction de hachage. Cela permet de prendre en compte des contraintes de taille au niveau d'un ou de plusieurs serveurs. En effet, un identifiant de module de sécurité est une valeur codée sur 32 digits. Prendre les 32 premiers ou derniers digits permet d'obtenir des identifiants anonymes de même taille que les identifiants physiques de module. L'invention n'est bien sûr pas limitée à ces fonctions, on peut par exemple utiliser les fonctions recommandées par la fédération SOGIS (*Senior Officiais Group Information Systems Security*) et décrites dans le document accessible via le lien suivant: *https://www.sogis.eu/documents/cc/crypto/SOGIS-Agreed-Cryptographic-Mechanisms-1.1.pdf*

L'utilisation d'une fonction de hachage pour le calcul de l'identifiant anonyme du module de sécurité 101 permet de garantir l'anonymat du module 101. La fonction *f* possède également la propriété de non collision, c'est-à-dire que pour tout x dont on connaît l'image *f(x)* il est très difficile de trouver *y* tel que: *f(x) = f(y).* Cette propriété est vérifiée dans la mesure où une donnée en entrée de la fonction est de taille inférieure ou égale à la donnée de sortie. Cette propriété garantit l'unicité des identifiants anonymes générés.

L'identifiant anonyme TEID ainsi calculé est envoyé au gestionnaire local de profil 103 en fin d'étape E3. À l'étape **E4,** l'identifiant anonyme TEID est mémorisé par le gestionnaire local de profil 103, puis transmis à l'application mobile 102, ainsi que le paramètre aléatoire (Pa).

À l'étape suivante **E5,** l'application mobile 102 envoie au serveur opérateur 11, les informations concernant les caractéristiques physiques de l'équipement 20 et du module de sécurité 201 qu'il a obtenues au terme de l'étape E0, l'identifiant anonyme TEID généré et la commande relative au profil d'accès au réseau, sélectionnée par l'utilisateur au cours de l'étape E1.

À l'étape **E6** qui suit, le serveur opérateur 11 envoie au serveur de préparation de données 12 une requête de préparation (dde_TEID) qui comprend l'identifiant anonyme TEID ainsi que les informations nécessaires à la préparation de la commande relative au profil d'accès au réseau. Ces informations comprennent la commande sélectionnée et les caractéristiques physiques de l'équipement 20 et du module 201.

Dans une étape suivante **E7** de préparation et d'envoi (prep_cmd), le serveur de préparation de données 12 prépare la commande relative au profil d'accès et adaptée à l'équipement 20. On entend par "préparer la commande" l'action de générer un module logiciel comprenant un ensemble d'instructions de code destinées à être exécutées par le module de sécurité 201. Le serveur de préparation 12 envoie également au serveur de découverte 13 une notification associée à l'identifiant anonyme TEID du module de sécurité 201. La notification est destinée à informer le serveur de découverte 13 qu'une commande a été préparée pour un module de sécurité dont l'identifiant anonyme est TEID et est disponible au niveau du serveur de préparation de données 12. Le serveur de découverte 13 mémorise qu'un événement est en attente pour l'identifiant anonyme TEID du module de sécurité 201; il mémorise également l'adresse du serveur de préparation de données 12 apte à fournir la commande associée à cet événement.

Dans la seconde phase du procédé décrite ci-après, le procédé selon l'invention continue avec des étapes mises en oeuvre par l'équipement 20.

Ainsi, au cours de l'étape **E8** (gen_TEID), l'équipement 20 obtient le paramètre aléatoire Pa utilisé lors de la première phase du procédé (étape E3) et calcul un identifiant anonyme à partir de son identifiant physique EID et du paramètre aléatoire Pa obtenu, en utilisant la même fonction à sens unique *f* qu'à l'étape E3 décrite plus haut. Étant donné que le calcul est effectué avec le même identifiant physique EID (celui du module eUICC 201), le même paramètre aléatoire Pa et un utilisant la même fonction *f*, le résultat, c'est-à-dire l'identifiant anonyme obtenu est identique à l'identifiant anonyme TEID calculé dans le terminal 10 au cours de l'étape E3 plus haut.

Plus précisément, lors de l'étape E8, l'application APP2 de l'équipement 20 reçoit le paramètre aléatoire Pa, soit directement par une entrée manuelle de l'utilisateur de l'équipement 20 (le conseiller commercial ou l'utilisateur-abonné mentionnés plus haut), via une interface utilisateur liée à l'application APP2, soit par lecture d'un code-barres (ou code équivalent) affiché sur l'écran du terminal de communication 10, via une application de lecture de tels codes associée à l'application APP2; l'identifiant EID de la carte eUICC (201) de l'équipement 20 ainsi que la fonction *f* susmentionnée étant fournis directement par l'application APP2 via la carte eUICC et le cas échéant le gestionnaire local de profil (LPA) 203, faisant interface avec la carte eUICC.

Les étapes suivent sont exécutées suite à une action volontaire de l'utilisateur, ou automatiquement, par exemple après un redémarrage de l'équipement 20 ou après un rafraîchissement régulier mis en oeuvre dans l'équipement 20, la commande relative au profil d'accès au réseau est alors exécutée à la suite d'échanges entre l'équipement 20, le serveur de découverte 13 et le serveur de préparation de données 12.

Ainsi, dans l'étape suivante **E9** d'authentification, optionnelle, une authentification mutuelle entre le module de sécurité 201 et le serveur de découverte 13 est mise en oeuvre. Les étapes de cette authentification sont décrites dans la spécification GSMA SGP.22 mentionnée plus haut. À noter que l'étape E9 est ici optionnelle dans le sens où, lorsqu'elle a lieu, le module de sécurité 201 fournit au serveur de découverte 13 son identifiant physique EID, conformément à la spécification SGP.22. On considère dans ce cas que l'utilisateur, en participant à cette authentification, consent de manière implicite à la divulgation de l'identifiant physique EID du module de sécurité 201. Cette étape, lorsqu'elle n'est pas exécutée, ne nuit pas à la sécurité du procédé. En effet, le serveur de découverte 13 ne connaît à ce stade qu'un identifiant anonyme et aléatoire d'un module de sécurité, qu'il ne peut relier à un identifiant physique EID de module et/ou à un module de sécurité pour lequel il a déjà été sollicité. L'anonymat du module de sécurité 201 est ainsi assuré vis-à-vis du serveur de découverte 13. Dans un autre exemple de réalisation, l'authentification, optionnelle, mise en oeuvre au cours de l'étape E9 est anonyme. Elle est basée par exemple sur une signature cryptographique de groupe. Dans ce cas, le serveur de découverte 13 a la garantie que le module de sécurité 201 qui s'est authentifié est un module eUICC valide; le serveur de découverte 13 n'a cependant pas connaissance de l'identifiant EID du module 201.

Dans l'étape suivante **E10** de demande d'informations (dde_cmd), l'application APP2 202 envoie au serveur de découverte 13 une requête d'obtention d'informations relatives à un ou des événements concernant le module de sécurité 201. L'équipement 20 est en effet configuré initialement avec l'adresse du serveur de découverte comme destinataire de telles requêtes d'obtention d'informations; cette adresse est enregistrée dans une mémoire de l'équipement 20, par exemple dans la carte eUICC 201, ou dans le module LPA 203 (lorsqu'il existe), ou encore dans l'application APP2. La requête d'obtention d'informations comprend l'identifiant anonyme TEID que l'application 202 a mémorisé au cours de l'étape E8 de génération de l'identification anonyme.

À l'étape suivante **E11** de réponse, le serveur de découverte 13 envoie (snd_@) à l'application 202 de l'équipement 20 l'adresse du serveur de préparation de données 12 qui a été enregistrée en association avec l'identifiant anonyme TEID reçu au cours de l'étape E7.

À l'étape **E12** qui suit, l'application 202 de l'équipement 20 se connecte de manière sécurisée au serveur de préparation de données 12 dont l'adresse lui a été fournie à l'étape précédente. La connexion est par exemple conforme au protocole connu sous le sigle TLS (*Transport Layer Security*). L'application 202 fournit au serveur de préparation de données 12 l'identifiant anonyme temporaire TEID du module de sécurité 201 afin de récupérer la commande relative au profil d'accès et préparée par le serveur de préparation de données 12 au cours de l'étape E7 pour le module de sécurité 201.

L'étape suivante **E13** est une étape d'authentification mutuelle entre le module de sécurité 201 et le serveur de préparation de données 12, et est mise en oeuvre conformément à la spécification GSMA SGP.22 mentionnée plus haut. A ce stade, le module de sécurité 201 de l'équipement 20 a la garantie de dialoguer avec un serveur de préparation de données légitime, et le serveur de préparation de données 12 a la garantie de dialoguer avec un module de sécurité légitime. Cependant, bien que connaissant l'identifiant physique EID du module qui s'est authentifié, le serveur de préparation ne peut pas déterminer à quel identifiant anonyme l'identifiant EID correspond.

Dans une étape suivante **E14** "d'envoi de preuve", le module de sécurité 201 envoie au serveur de préparation de données 12 le paramètre aléatoire *r* utilisé pour calculer l'identifiant anonyme TEID du module 201 au cours de l'étape E3 décrite plus haut, et éventuellement son identifiant physique EID. À noter que l'identifiant EID du module 201 est récupéré par le serveur de préparation de données 12 au cours de l'étape E13 d'authentification. Cet envoi est destiné à permettre au serveur de préparation de données 12 d'identifier le module de sécurité associé à l'identifiant anonyme TEID. Cet envoi constitue aussi une requête du module de sécurité 201 pour obtenir la commande. Par ailleurs, cet envoi constitue également une preuve pour le serveur de préparation de données 12 que l'identifiant temporaire TEID pour lequel la commande relative au profil d'accès a été préparée correspond bien à l'identifiant physique EID du module de sécurité 201 qui requiert la commande.

Dans une étape suivante **E15** de calcul et de vérification, le serveur de préparation de données 12 calcule un identifiant de contrôle, noté TEID', à partir de l'identifiant physique EID et du paramètre aléatoire *r* qu'il a reçus à l'issue de l'étape précédente E14. À cette fin, le serveur de préparation de données 12 applique la même fonction à sens unique *f* que celle utilisée par le module de sécurité 201 au cours de l'étape E3 de génération, et appliquée à l'identifiant physique EID et au paramètre aléatoire *r* reçus au cours de l'étape E14. Le serveur de préparation de données 12 vérifie ensuite si l'identifiant de contrôle calculé TEID' est égal ou non à l'identifiant anonyme temporaire TEID fourni par l'équipement 20 au cours de l'étape d'authentification E13.

Ainsi, s'il est déterminé que l'identifiant de contrôle TEID' est égal à l'identifiant temporaire TEID (E15, "ok"), le serveur de préparation de données 12 délivre au module de sécurité 201, à l'étape **E16** (del_cmd), la commande qu'il a préparée (étape E7) pour exécution par ce dernier. Ainsi, le serveur de préparation de données 12 ne délivre la commande qui a été préparée qu'au module de sécurité 201 pour lequel elle a été initialement requise par le serveur opérateur 11 (étape E6).

Dans le cas contraire, c'est-à-dire s'il est déterminé que l'identifiant de contrôle TEID' ne correspond pas à l'identifiant anonyme TEID (E15, "nok"), le procédé s'arrête. En effet, dans ce cas, cela signifie que le module de sécurité qui a envoyé son identifiant (EID) au cours de l'étape E14 pour obtenir une commande, n'est pas celui pour lequel la commande a été préparée initialement, suite à la requête de préparation envoyée par le serveur opérateur 11 (étape E6).

À l'étape **E17** qui suit la délivrance de la commande au module de sécurité 201, le serveur de préparation de données 12 envoie (snd_info) au serveur de découverte 13 un message dit de relâchement destiné à l'informer que la commande relative au profil associée à l'identifiant anonyme de contrôle TEID' a été traitée. Le serveur de découverte 13 peut alors supprimer l'événement qu'il a créé et mémorisé pour l'identifiant anonyme TEID' au terme de l'étape E7.

Selon une variante de réalisation, l'étape E12 d'accès au serveur de préparation, au cours de laquelle l'application 203 de l'équipement 20 se connecte au serveur de préparation de données 12 et lui fournit l'identifiant temporaire TEID du module de sécurité 201 n'est pas mise en oeuvre. En effet, selon cette variante, le serveur de préparation de données 12 obtient l'identifiant physique EID du module de sécurité 201 au cours de l'étape E13 d'authentification. Il obtient également le paramètre aléatoire r au cours de l'étape E14 d'envoi de preuve. Ensuite, il calcule, au cours de l'étape E15 de calcul et de vérification, un nouvel identifiant anonyme TEID" à partir du paramètre aléatoire r et de l'identifiant EID reçus précédemment, et vérifie la présence de cet identifiant anonyme TEID" dans une base de données contenant les identifiants anonymes pour lesquels des commandes sont en attente. L'unicité des identifiants anonymes, inhérente à l'utilisation de la fonction *f* à sens unique qui possède la propriété de non collision, garantit que l'identifiant anonyme calculé (TEID") est associé à un identifiant physique (EID) légitime de module de sécurité.

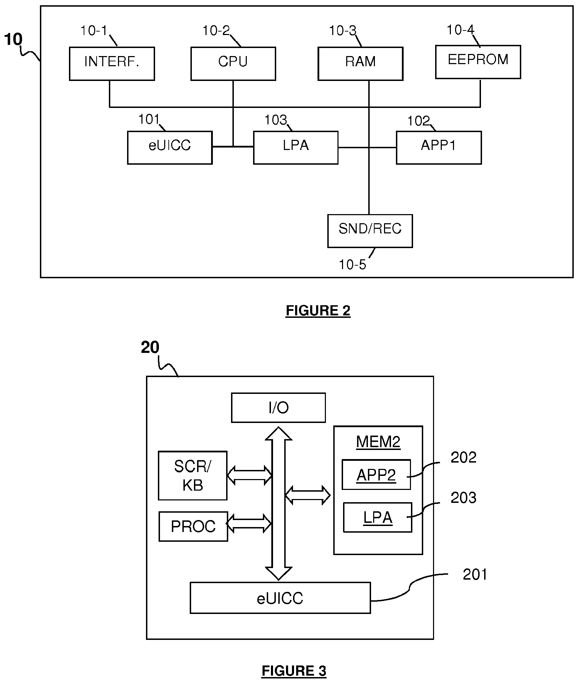

La **figure 2** est une représentation schématique d'un terminal de communication (10) configuré pour mettre en oeuvre certaines des étapes (E1-E6) du procédé d'obtention d'une commande relative à un profil d'accès à un réseau, tel que décrit ci-dessus. Le terminal de communication 10 est par exemple un terminal mobile ou une tablette.

Comme représenté sur la figure 2, le terminal de communication 10 comprend:

- une interface radio 10-1, agencée pour servir d'interface avec un réseau mobile de communication;
- un microprocesseur 10-2, ou CPU (*Central Processing Unit*), agencé pour charger des instructions en mémoire, les exécuter et effectuer des opérations;
- un ensemble de mémoires, dont une mémoire volatile 10-3, ou RAM (*Random Access Memory*) utilisée pour exécuter des instructions de code, stocker des variables, etc.;
- une mémoire de stockage 10-4 de type EEPROM (*Electronically-Erasable Programmable Read-Only Memory*). La mémoire de stockage 10-4 est agencée pour mémoriser des données et des applications. En particulier, la mémoire de stockage 10-4 mémorise un module logiciel comprenant des instructions de code pour mettre en oeuvre les étapes E1 à E6 du procédé d'obtention d'une commande, exposées plus haut;
- un module de sécurité 101, par exemple un module eUICC, agencé pour stocker et traiter des données sensibles, telles que des clés et des algorithmes cryptographiques. En particulier, le module de sécurité est agencé pour exécuter des commandes relatives à un profil d'accès au réseau qui comprend ces données sensibles. Par exemple, une commande peut consister en le chargement d'un profil d'accès au réseau après souscription à une offre de service auprès d'un opérateur de réseau, en la configuration ou en la mise à jour du profil, etc.;
- un gestionnaire local de profil 103, agencé pour fournir à l'utilisateur du terminal 10 une interface administrative du terminal 10. Par exemple, dans le cas du chargement d'un profil d'accès au réseau sur le terminal 10, le gestionnaire local de profil 103 est apte à récupérer le profil auprès de l'opérateur via une connexion Internet sécurisée auprès du serveur de préparation de données 12 et à commander son installation et son activation sur le module de sécurité 101;

- une application mobile APP1 102, agencée pour proposer une interface à partir de laquelle l'utilisateur du terminal 10 peut passer des commandes relatives au profil d'accès au réseau, telles que souscrire un abonnement auprès d'un opérateur, demander une configuration ou une mise à jour d'un profil d'accès au réseau, etc.

L'application mobile 102 est fournie par un fournisseur de services, par exemple un opérateur de réseau mobile et elle couplée avec la mémoire de stockage 10-4 et avec un modules 10-5 de réception-transmission d'informations et/ou de requêtes, telles que des requêtes d'obtention de commandes, à destination des serveurs mentionnés plus haut, c'est-à-dire le serveur opérateur 11, le serveur de préparation de données 12, et le serveur de découverte 13. En outre, selon un exemple de réalisation, le terminal de communication 10 comprend en outre un module de lecture d'un code-barres ou plus généralement de code à deux dimensions, intégré ou associé à l'application APP1, et permettant notamment de lire (étape E0) un code à deux dimensions affiché par l'équipement 20, lequel code représentant l'identifiant physique (EID) du module de sécurité 201 de l'équipement 20.

La **figure 3** représente plus précisément l'équipement de communication 20 de la figure 1. L'équipement 20 est configuré selon l'invention pour mettre en oeuvre les étapes E0 et E8-E17 du procédé d'obtention d'une commande décrit plus haut.

L'équipement 20, par exemple une montre connectée, comprend notamment les modules fonctionnels suivants:

- un module de sécurité 201 de type eUICC;
- un module "I/O" de communication d'entrée/sortie, destiné à communiquer avec un réseau de communication tel qu'un réseau mobile;
- un module processeur "PROC" associé à un système d'exploitation (non représenté), par exemple le système d'exploitation Android™ de la société Google, gérant l'interaction entre les différents modules et le processeur de l'équipement 20;
- un dispositif d'affichage tel qu'un écran associé à un dispositif utilisateur d'entrée/sortie par exemple un clavier tactile: "SCR/KB";
- un module mémoire "MEM2" dans lequel est stockée une application ou module logiciel 202 (APP2) selon l'invention configuré pour mettre en oeuvre les étapes E0 et E8-E17 du procédé selon l'invention;
- un module le gestionnaire local de profil (LPA) 203, implémenté ou non selon les besoins et le type d'équipement 20: équipement de type objet connecté ou terminal de communication de type "compagnon".

Grâce aux modules constitutifs précités, l'équipement 20 est ainsi configuré notamment pour: afficher sur un écran de l'équipement 20 l'identifiant EID du module de sécurité 201 sous la forme d'un code à deux dimensions par exemple; calculer (E8) un identifiant anonyme (TEID), à partir d'un paramètre aléatoire (Pa), obtenu préalablement, et de l'identifiant physique (EID; envoyer (E10) au serveur de découverte (13), une requête d'obtention d'informations destinée à obtenir une commande relative à un profil d'accès réseau, cette requête comprenant l'identifiant anonyme (TEID), afin d'obtenir en réponse du serveur de découverte une adresse du serveur de préparation (12) de la commande; envoyer (E14) au serveur de préparation (12) le paramètre aléatoire (Pa) et l'identifiant physique (EID) utilisés pour calculer l'identifiant anonyme (TEID); recevoir (E16) du serveur de préparation de données (12) la commande préparée après vérification (E15) par le serveur de préparation (12) de l'authenticité de l'identifiant anonyme (TEID); et, exécuter la commande.

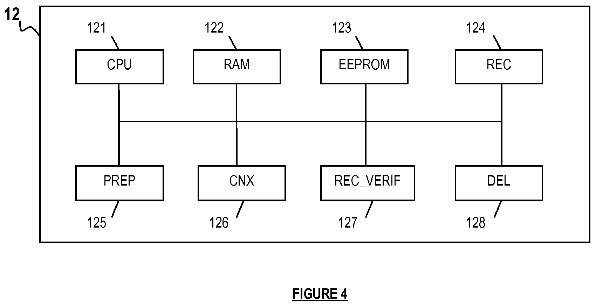

La **figure 4** est une représentation schématique d'un serveur de préparation de données (12), apte à mettre en oeuvre certaines des étapes du procédé d'obtention d'une commande relative à un profil d'accès à un réseau, selon un exemple de réalisation de l'invention.

Le serveur 12 est un équipement informatique, accessible depuis un réseau de communication tel qu'Internet. Il comprend notamment:

- une unité de traitement 121, ou CPU, destinée à charger des instructions en mémoire, à les exécuter, à effectuer des opérations, sous le contrôle d'un système d'exploitation (non représenté;
- un ensemble de mémoires, dont une mémoire volatile 122, ou RAM utilisée pour exécuter des instructions de code, stocker des variables, etc., et une mémoire de stockage 123 de type EEPROM; en particulier, la mémoire de stockage 123 est agencée pour mémoriser un module logiciel de fourniture d'une commande relative à un profil d'accès au réseau, qui comprend des instructions de code pour mettre en oeuvre celles des étapes du procédé d'obtention d'une commande relative à un profil d'accès qui sont mises en oeuvre par le serveur 12, tel qu'exposé supra.

Le serveur 12 comprend également les modules fonctionnels suivants:

- un module de réception (REC) 124, configuré pour recevoir (étape E7) en provenance du serveur opérateur 11, une requête de commande associée à un identifiant anonyme (TEID) de module de sécurité;
- un module de préparation (PREP) 125, configuré pour préparer (étape E7) une commande suite à la réception d'une requête et pour envoyer (étape E7) au serveur de découverte 13 une notification destinée à indiquer que la commande a été préparée, cette notification comprenant l'adresse du serveur 12 et l'identifiant anonyme (TEID);

- un module de connexion (CNX) 126, configuré pour accepter une connexion d'un équipement de communication, l'adresse du serveur 12 ayant été préalablement fournie à cet équipement de communication par le serveur de découverte 13. Le module de connexion 126 est ainsi configuré pour mettre en oeuvre l'étape E12 du procédé décrit précédemment;

- un module 127 de réception et de vérification (REC_VERIF), agencé pour recevoir en provenance d'un équipement de communication tel l'équipement 20, un identifiant physique du module de sécurité 201 de l'équipement 20 et un paramètre aléatoire (Pa), et pour vérifier que l'identifiant anonyme (TEID) préalablement reçu de l'équipement 20 a été calculé à partir de l'identifiant physique (EID) du module 201 et du paramètre aléatoire correspondant (Pa). Le module 127 de réception et de vérification est ainsi configuré pour mettre en oeuvre l'étape E15 du procédé d'obtention d'une commande, tel que décrit supra;

- un module de délivrance (DEL) 128, agencé pour délivrer la commande à l'équipement de communication 20 lorsque la vérification est positive. Le module de délivrance 128 est ainsi agencé pour mettre en oeuvre l'étape E16 du procédé décrit supra.

En pratique, les modules précités de réception 124, de préparation 125, de connexion 126, de réception et de vérification 127, et le module de délivrance 128 sont des modules logiciels comprenant des instructions de programme d'ordinateur qui, lorsqu'elles sont exécutées par un processeur du serveur 12, provoquent la mise en oeuvre les étapes du procédé d'obtention d'une commande relative à un profil d'accès au réseau tel que décrit précédemment, qui sont mises en oeuvre par le serveur 12.

**Revendications**

1. **Procédé** d'obtention d'une commande relative à un profil d'accès réseau d'un module de sécurité (201) de type "carte à circuit intégré universelle embarquée", eUICC, ledit module de sécurité étant incorporé dans un équipement de communication (20) et étant associé à un identifiant physique, EID, le procédé comportant les étapes suivantes:

   • (a) obtention (E0) par un terminal de communication (10) de l'identifiant physique EID dudit module de sécurité (201), et calcul (E1-E4) d'un identifiant anonyme TEID du module de sécurité (201) à partir de l'identifiant physique EID et d'un paramètre, Pa, obtenu de façon aléatoire, dit paramètre aléatoire;

   • (b) transmission (E5, E6) par ledit terminal (10) d'une requête d'obtention de la commande, via un premier serveur (11) dit "serveur opérateur", à destination d'un second serveur (12), dit "serveur de préparation de données", ladite requête d'obtention incluant l'identifiant anonyme TEID du module de sécurité (202); suivi de la préparation (E7) de la commande par le serveur de préparation de données (12) et l'enregistrement de la commande associée à l'identifiant anonyme TEID; et suivi de l'envoi (E7) à un serveur (13) dit « serveur de découverte » d'une notification d'information de commande préparée associée à l'identifiant anonyme TEID le serveur de découverte (13) mémorisant en conséquence l'adresse du serveur de préparation de commande (12), associée à la notification;

   • (c) obtention (E8) par l'équipement de communication (20) du paramètre aléatoire (Pa) et calcul (E11) de l'identifiant anonyme TEID partir de l'identifiant physique EID du module de sécurité (201) et du paramètre aléatoire Pa;

   • (d) envoi (E10) par l'équipement de communication (20) au troisième serveur (13), dit "serveur de découverte", d'une requête d'obtention d'informations destinée à obtenir la commande, ladite requête d'obtention d'informations comprenant l'identifiant anonyme TEID afin d'obtenir en réponse, de la part du serveur de découverte, une adresse du serveur de préparation (12).

2. Procédé selon la revendication 1, dans lequel ledit identifiant anonyme TEID est calculé (E3) en appliquant une fonction à sens unique à l'identifiant physique EID du module de sécurité (201) et au paramètre aléatoire Pa ladite fonction à sens unique ayant également une propriété de non collision.

3. Procédé selon l'une quelconque des revendications 1 à 2, comprenant:

   • l'envoi (E14) par ledit équipement de communication (20) au serveur de préparation de données (12) du paramètre aléatoire Pa et de l'identifiant physique EID utilisés pour calculer l'identifiant anonyme TEID;
   • la réception (E16) en provenance du serveur de préparation de données (12), de la commande préparée, après vérification (E15) par le serveur de préparation de données (12) de l'authenticité de l'identifiant anonyme TEID;
   • l'exécution de la commande reçue par le module de sécurité (201).

4. Procédé selon l'une quelconque des revendications 1 à 3, comprenant une authentification (E9) mutuelle entre le module de sécurité (201) et le serveur de découverte (13), ladite authentification étant représentative d'un accord de l'utilisateur de divulguer l'identifiant physique du module de sécurité au serveur de découverte (13).

5. Procédé selon l'une quelconque des revendications 1 à 4, comprenant une authentification anonyme (E9) du module de sécurité (201) auprès du serveur de découverte (13) mise en oeuvre au moyen d'un algorithme de signature de groupe.

6. **Système** d'obtention d'une commande relative à un profil d'accès réseau d'un module de sécurité (201) de type "carte à circuit intégré universelle embarquée", eUICC, ledit module de sécurité étant incorporé dans un équipement de communication (20) et étant associé à un identifiant physique, EID, le système comprenant des processeurs configurés pour réaliser les étapes suivantes :

- (a) obtention (E0) par un terminal de communication (10) de l'identifiant physique EID dudit module de sécurité (201), et calcul (E1-E4) d'un identifiant anonyme TEID du module de sécurité (201) à partir de l'identifiant physique EID et d'un paramètre, Pa, obtenu de façon aléatoire, dit paramètre aléatoire;
- (b) transmission (E5, E6) par ledit terminal (10) d'une requête d'obtention de la commande, via un premier serveur (11) dit "serveur opérateur", à destination d'un second serveur (12), dit "serveur de préparation de données", ladite requête d'obtention incluant l'identifiant anonyme TEID du module de sécurité (202); suivi de la préparation (E7) de la commande par le serveur de préparation de données (12) et l'enregistrement de la commande associée à l'identifiant anonyme TEID; et suivi de l'envoi (E7) à un serveur (13) dit « serveur de découverte » d'une notification d'information de commande préparée associée à l'identifiant anonyme TEID, le serveur de découverte (13) mémorisant en conséquence l'adresse du serveur de préparation de commande (12), associée à la notification;
- (c) obtention (E8) par l'équipement de communication (20) du paramètre aléatoire Pa et calcul (E11) de l'identifiant anonyme TEID à partir de l'identifiant physique EID du module de sécurité (201) et du paramètre aléatoire Pa;
- (d) envoi (E10) par l'équipement de communication (20) au troisième serveur (13), dit "serveur de découverte", d'une requête d'obtention d'informations destinée à obtenir la commande, ladite requête d'obtention d'informations comprenant l'identifiant anonyme TEID, afin d'obtenir en réponse, de la part du serveur de découverte, une adresse du serveur de préparation

de (12).

7. Système selon la revendication 6, configuré en outre pour:

- envoyer (E14) au serveur de préparation de données (12) ledit paramètre aléatoire Pa et l'identifiant physique EID utilisés pour calculer l'identifiant anonyme TEID;
- recevoir (E16) du serveur de préparation de données (12) la commande préparée, après vérification (E15) par le serveur de préparation de données (12) de l'authenticité de l'identifiant anonyme TEID,
- exécuter la commande reçue.

**Patentansprüche**

1. Verfahren zum Erhalt eines Befehls bezüglich eines Netzzugriffsprofils eines Sicherheitsmoduls (201) des Typs "embedded Universal Integrated Circuit Card", eUICC, wobei das Sicherheitsmodul in eine Kommunikationsausrüstung (20) eingebaut und einer physischen Kennung EID zugeordnet ist, wobei das Verfahren die folgenden Schritte aufweist:

- (a) Erhalt (E0) der physischen Kennung EID des Sicherheitsmoduls (201) durch ein Kommunikationsendgerät (10) und Berechnung (E1-E4) einer anonymen Kennung TEID des Sicherheitsmoduls (201) ausgehend von der physischen Kennung EID und von einem zufällig erhaltenen Parameter Pa, Zufallsparameter genannt;
- (b) Übertragung (E5, E6), durch das Endgerät (10), einer Anforderung zum Erhalt des Befehls über einen ersten Server (11), genannt "Betreiberserver", an einen zweiten Server (12), genannt "Datenaufbereitungsserver", wobei die Erhaltsanforderung die anonyme Kennung TEID des Sicherheitsmoduls (202) enthält; gefolgt von der Aufbereitung (E7) des Befehls durch den Datenaufbereitungsserver (12) und der Speicherung des der anonymen Kennung TEID zugeordneten Befehls; und gefolgt vom Senden (E7) an einen Server (13) genannt "Entdeckungsserver" einer der anonymen Kennung TEID zugeordneten Informationsbenachrichtigung über einen aufbereiteten Befehl, wobei der Entdeckungsserver(13) dementsprechend die der Benachrichtigung zugeordnete Adresse des Befehlsaufbereitungsservers (12) speichert;
- (c) Erhalt (E8) des Zufallsparameters (Pa) durch die Kommunikationsausrüstung (20) und Berechnung (E11) der anonymen Kennung TEID ausgehend von der physischen Kennung EID des Sicherheitsmoduls (201) und vom Zufallsparameter Pa;

• (d) Senden (E10), durch die Kommunikationsausrüstung (20), an den dritten Server (13), genannt "Entdeckungsserver", einer Erhaltsanforderung von Informationen, die dazu bestimmt ist, den Befehl zu erhalten, wobei die Informationserhaltsanforderung die anonyme Kennung TEID enthält, um als Antwort vom Entdeckungsserver eine Adresse des Aufbereitungsservers (12) zu erhalten.

2. Verfahren nach Anspruch 1, wobei die anonyme Kennung TEID durch Anwendung einer Einwegfunktion an die physische Kennung EID des Sicherheitsmoduls (201) und an den Zufallsparameter Pa berechnet wird (E3), wobei die Einwegfunktion ebenfalls eine Nichtkollisionseigenschaft hat.

3. Verfahren nach einem der Ansprüche 1 bis 2, das enthält:

    • das Senden (E14) des Zufallsparameters Pa und der physischen Kennung EID, die verwendet werden, um die anonyme Kennung TEID zu berechnen, durch die Kommunikationsausrüstung (20) an den Datenaufbereitungsserver (12);
    • den Empfang (E16) des aufbereiteten Befehls vom Datenaufbereitungsserver (12) nach Überprüfung (E15) der Authentizität der anonymen Kennung TEID durch den Datenaufbereitungsserver (12); und
    • die Ausführung des empfangenen Befehls durch das Sicherheitsmodul (201).

4. Verfahren nach einem der Ansprüche 1 bis 3, das eine gegenseitige Authentifizierung (E9) zwischen dem Sicherheitsmodul (201) und dem Entdeckungsserver (13) enthält, wobei die Authentifizierung für eine Zustimmung des Benutzers repräsentativ ist, die physische Kennung des Sicherheitsmoduls dem Entdeckungsserver (13) bekanntzugeben.

5. Verfahren nach einem der Ansprüche 1 bis 4, das eine anonyme Authentifizierung (E9) des Sicherheitsmoduls (201) beim Entdeckungsserver (13) enthält, die mittels eines Gruppensignaturalgorithmus durchgeführt wird.

6. System zum Erhalt eines Befehls bezüglich eines Netzzugriffsprofils eines Sicherheitsmoduls (201) des Typs "embedded Universal Integrated Circuit Card", eUICC, wobei das Sicherheitsmodul in eine Kommunikationsausrüstung (20) eingebaut und einer physischen Kennung EID zugeordnet ist, wobei das System Prozessoren enthält, die konfiguriert sind, die folgenden Schritte durchzuführen:

• (a) Erhalt (E0) der physischen Kennung EID des Sicherheitsmoduls (201) durch ein Kommunikationsendgerät (10) und Berechnung (E1-E4) einer anonymen Kennung TEID des Sicherheitsmoduls (201) ausgehend von der physischen Kennung EID und von einem zufällig erhaltenen Parameter Pa, genannt Zufallsparameter;

• (b) Übertragung (E5, E6), durch das Endgerät (10), einer Erhaltsanforderung des Befehls, über einen ersten Server (11), genannt "Betreiberserver", an einen zweiten Server (12), genannt "Datenaufbereitungsserver", wobei die Erhaltsanforderung die anonyme Kennung TEID des Sicherheitsmoduls (202) enthält; gefolgt von der Aufbereitung (E7) des Befehls durch den Datenaufbereitungsserver (12) und der Speicherung des der anonymen Kennung TEID zugeordneten Befehls; und gefolgt vom Senden (E7) an einen Server (13) genannt "Entdeckungsserver" einer der anonymen Kennung TEID zugeordneten Informationsbenachrichtigung über einen aufbereiteten Befehl, wobei der Entdeckungsserver (13) dementsprechend die der Benachrichtigung zugeordnete Adresse des Befehlsaufbereitungsservers (12) speichert;

• (c) Erhalt (E8) des Zufallsparameters Pa durch die Kommunikationsausrüstung (20) und Berechnung (E11) der anonymen Kennung TEID ausgehend von der physischen Kennung EID des Sicherheitsmoduls (201) und vom Zufallsparameter Pa;

• (d) Senden (E10) durch die Kommunikationsausrüstung (20) an den dritten Server (13), genannt "Entdeckungsserver", einer Informationserhaltsanforderung, die dazu bestimmt ist, den Befehl zu erhalten, wobei die Informationserhaltsanforderung die anonyme Kennung TEID enthält, um als Antwort vom Entdeckungsserver eine Adresse des Aufbereitungsservers (12) zu erhalten.

7. System nach Anspruch 6, das außerdem konfiguriert ist, um:

    • den Zufallsparameter Pa und die physische Kennung EID an den Datenaufbereitungsserver (12) zu senden (E14), die verwendet werden, um die anonyme Kennung TEID zu berechnen;
    • den aufbereiteten Befehl vom Datenaufbereitungsserver (12) nach Überprüfung (E15) der Authentizität der anonymen Kennung TEID durch den Datenaufbereitungsserver (12) zu empfangen (E16), und
    • den empfangenen Befehl auszuführen.

## Claims

1. Method for obtaining a command relating to a network access profile of an "embedded universal integrated circuit card", eUICC, security module (201), said security module being incorporated in a communication equipment (20) and being associated with a physical identifier, EID, the method comprising the following steps:

   • (a) obtaining (E0), by way of a communication terminal (10), the physical identifier EID of said security module (201), and computing (E1-E4) an anonymous identifier, TEID, of the security module (201) from the physical identifier EID and a randomly obtained parameter, Pa, called random parameter;
   • (b) transmitting (E5, E6) a command obtainment request, by way of said terminal (10), via a first server (11), called "operator server", to a second server (12), called "data preparation server", said obtainment request including the anonymous identifier TEID of the security module (202); followed by preparing (E7) the command by way of the data preparation server (12) and storing the command associated with the anonymous identifier TEID; and followed by sending (E7), to a server (13), called "discovery server", a prepared command information notification associated with the anonymous identifier TEID, the discovery server (13) consequently storing the address of the command preparation server (12), associated with the notification;
   • (c) obtaining (E8), by way of the communication equipment (20), the random parameter (Pa) and computing (E11) the anonymous identifier TEID from the physical identifier EID of the security module (201) and the random parameter Pa;
   • (d) sending (E10), by way of the communication equipment (20), to the third server (13), called "discovery server", an information obtainment request intended to obtain the command, said information obtainment request comprising the anonymous identifier TEID, in order to obtain, in response, from the discovery server, an address of the preparation server (12).

2. Method according to Claim 1, wherein said anonymous identifier TEID is computed (E3) by applying a one-way function to the physical identifier EID of the security module (201) and to the random parameter Pa, said one-way function also having a non-collision property.

3. Method according to either one of Claims 1 and 2, comprising:

   • sending (E14) the random parameter Pa and the physical identifier EID used to compute the anonymous identifier TEID, by way of said communication equipment (20), to the data preparation server (12);
   • receiving (E16) the prepared command from the data preparation server (12), after verification (E15), by the data preparation server (12), of the authenticity of the anonymous identifier TEID; and
   • executing the received command by way of the security module (201).

4. Method according to any one of Claims 1 to 3, comprising mutual authentication (E9) between the security module (201) and the discovery server (13), said authentication being representative of an agreement of the user to disclose the physical identifier of the security module to the discovery server (13).

5. Method according to any one of Claims 1 to 4, comprising anonymous authentication (E9) of the security module (201) with the discovery server (13), implemented by means of a group signature algorithm.

6. System for obtaining a command relating to a network access profile of an "embedded universal integrated circuit card", eUICC, security module (201), said security module being incorporated in a communication equipment (20) and being associated with a physical identifier, EID, the system comprising processors configured to carry out the following steps:

   • (a) obtaining (E0), by way of a communication terminal (10), the physical identifier EID of said security module (201), and computing (E1-E4) an anonymous identifier, TEID, of the security module (201) from the physical identifier EID and a randomly obtained parameter, Pa, called random parameter;
   • (b) transmitting (E5, E6) a command obtainment request, by way of said terminal (10), via a first server (11), called "operator server", to a second server (12), called "data preparation server", said obtainment request including the anonymous identifier TEID of the security module (202); followed by preparing (E7) the command by way of the data preparation server (12) and storing the command associated with the anonymous identifier TEID; and followed by sending (E7), to a server (13), called "discovery server", a prepared command information notification associated with the anonymous identifier TEID, the discovery server (13) consequently storing the address of the command preparation server (12), associated with the notification;
   • (c) obtaining (E8), by way of the communication equipment (20), the random parameter (Pa) and computing (E11) the anonymous identifier TEID from the physical identifier EID of the security module (201) and the random parameter Pa;
• (d) sending (E10), by way of the communication equipment (20), to the third server (13), called "discovery server", an information obtainment request intended to obtain the command, said information obtainment request comprising the anonymous identifier TEID, in order to obtain, in response, from the discovery server, an address of the preparation server (12).

7. System according to Claim 6, furthermore configured to:

• send (E14) said random parameter Pa and the physical identifier EID used to compute the anonymous identifier TEID to the data preparation server (12);
• receive (E16) the prepared command from the data preparation server (12), after verification (E15), by the data preparation server (12), of the authenticity of the anonymous identifier TEID, and
• execute the received command.

**FIGURE 1**

**FIGURE 2**

**FIGURE 3**

**FIGURE 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018185435 A1

- US 20190075453 A